# FASCICULE DE BREVET EUROPEEN

(11) **EP 3 892 833 B1**
(45) Date de publication et mention de la délivrance du brevet: **31.05.2023**
(21) Numéro de dépôt: 21167092.2
(22) Date de dépôt: 07.04.2021
(51) Int. Cl.: F01M 11/00, F01M 11/10, F16N 29/00, F01D 25/18, F01D 25/20, F02C 7/06

(54) **TURBOMACHINE AVEC RESERVOIR D'HUILE MUNI DE CAPTEURS**
TURBOMASCHINE MIT ÖLTANK, DER MIT SENSOREN VERSEHEN IST
TURBINE ENGINE WITH OIL TANK PROVIDED WITH SENSORS

(30) Priorité: 08.04.2020 BE 202005228
(43) Date de publication de la demande: 13.10.2021
(73) Titulaire: Safran Aero Boosters SA, 4041 Herstal (BE)
(72) Inventeur: RAIMARCKERS, Nicolas, Oscar, Louis, Gislain, 4041 Herstal (BE)
(74) Mandataire: Lecomte & Partners

(56) Documents cités:
- EP-A1- 3 150 978
- EP-A1- 3 399 164
- JP-A- H11 270 787
- JP-B2- 3 196 792
- US-A1- 2013 068 015
- US-A1- 2014 130 587
- US-A1- 2017 183 992
- US-A1- 2018 187 622
- US-B1- 7 581 434

## Description

### Domaine technique

L'invention traite de la mesure de propriétés de l'huile dans un réservoir d'huile de turbomachine. L'invention propose également une turbomachine, notamment un turboréacteur d'aéronef ou un turbopropulseur d'aéronef, comportant un réservoir d'huile instrumenté. L'invention discute enfin d'un procédé d'analyse des données récoltées dans le réservoir.

### Technique antérieure

Un turboréacteur utilise de l'huile pendant son fonctionnement. L'huile est utilisée pour la lubrification ou pour le refroidissement de certains composants de la turbomachine, ainsi que pour le réchauffement de zones sujettes au givre. En outre, l'huile peut être pressurisée dans le but d'actionner des vérins hydrauliques.

Ce fluide jouant un rôle crucial, sa qualité doit être préservée et sa quantité disponible dans le turboréacteur doit être mesurée précisément. Afin de répondre à ce dernier impératif, le réservoir d'huile présente couramment une fenêtre de visualisation du niveau de liquide stocké. Elle comprend une vitre transparente permettant un contrôle interne du réservoir par simple vérification visuelle. Cette vérification ne peut se faire que lors d'une escale ou d'une opération de maintenance.

La demande de brevet FR 3 035 919 A1 décrit un procédé de surveillance de la consommation d'huile dans une turbomachine en déterminant la masse d'huile présente dans le réservoir. La masse d'huile est calculée par la mesure de pression dans un ou plusieurs points bas du réservoir.

Le document EP 3 282 104 A1 décrit un système qui mesure le niveau d'huile dans un réservoir par une mesure de la capacité électrique de l'huile. La mesure capacitive est connue pour être une alternative à la mesure résistive, cette dernière ayant une plage de fonctionnement limitée en température.

D'autres exemples de capteurs sont décrits dans les documents US 2014/130587 A1, US 2013/068015 A1 et EP 3 150 978 A1.

Dans chacun des cas, les valeurs obtenues sont fiables à cela près qu'elles sont basées sur des conditions nominales de qualité de l'huile et de température de fonctionnement. Comme la qualité de l'huile n'est pas mesurée *in situ* et que le temps d'utilisation de l'huile (son vieillissement) fait varier ses propriétés physico-chimiques, la précision des mesures n'est plus aussi précise après un certain temps d'utilisation de l'huile, qu'elle serait dans des conditions nominales.

Il existe donc des conditions dans lesquelles les mesures relevées ne reflètent pas fidèlement la réalité. Une amélioration de la précision de ces mesures est donc souhaitable.

### Résumé de l'invention

### Problème technique

L'invention a pour objectif d'améliorer la fiabilité des mesures des propriétés de l'huile dans un réservoir de turbomachine.

L'invention a également pour objectif de proposer une solution technique compacte et fiable.

### Solution technique

L'invention a pour objet une turbomachine comprenant un circuit de lubrification avec un réservoir d'huile, le réservoir comprenant : une chambre destinée à contenir l'huile ; une entrée et une sortie permettant respectivement à l'huile de pénétrer dans la chambre et d'en être extraite ; des capteurs, agencés dans la chambre, dans l'entrée et/ou dans la sortie ; les capteurs comprenant un capteur pour mesurer la résistance électrique de l'huile, un capteur de température pour mesurer la température de l'huile et un capteur de la quantité de débris ferromagnétiques présents dans l'huile, la turbomachine étant remarquable en ce qu'elle comprend une unité de calcul recevant les données mesurées par les capteurs, l'unité de calcul déterminant, sur la base des mesures des capteurs, au moins l'un des éléments parmi : la qualité de l'huile, le niveau d'huile, le taux de pollution de l'huile, ou la masse de l'huile, la turbomachine comprenant en outre une soufflante et un capteur de vitesse de rotation de la soufflante, qui communique ses mesures à l'unité de calcul, celle-ci déterminant la durée de fonctionnement restante de la turbomachine avant un manque d'huile en fonction de la vitesse de rotation et de la masse d'huile.

L'intégration de plusieurs capteurs au sein du réservoir permet de mesurer différentes propriétés physico-chimiques de l'huile au même endroit du circuit hydraulique et donc de prendre en compte les différentes mesures dans l'estimation de la qualité d'huile et du niveau d'huile, améliorant ainsi la précision des valeurs déterminées.

Le réservoir est particulièrement avantageux pour ces mesures car il présente à la fois des portions où le fluide s'écoule (en entrée ou sortie) et des portions sans remous. Idéalement, le réservoir comprend également une zone toujours occupée par de l'huile.

L'unité de calcul peut être attenante ou incorporée au réservoir et peut se présenter sous la forme d'un boitier compact, rassemblant toute l'électronique nécessaire afin de calculer et de communiquer les valeurs obtenues au poste de pilotage. Alternativement, l'unité de calcul peut être déportée (FADEC par exemple).

Selon un mode avantageux de l'invention, le capteur de débris ferromagnétique est disposé dans l'entrée ou dans la sortie. Il est ainsi possible de bénéficier du mouvement de l'huile en entrée ou en sortie, pour maximiser la captation des débris ferromagnétiques.

Selon un mode avantageux de l'invention, le réservoir comporte un capteur capacitif pour mesurer la capacité électrique de l'huile.

Selon un mode avantageux de l'invention, le capteur de la vitesse de rotation de la soufflante est un capteur de pression disposé dans l'entrée du réservoir.

L'invention a également pour objet un procédé de surveillance des propriétés de l'huile dans un réservoir d'une turbomachine, le procédé comprenant les étapes suivantes : (a) mesure de la température de l'huile dans le réservoir ; (b) mesure de la résistance électrique de l'huile dans le réservoir ; (c) mesure de la capacité électrique de l'huile dans le réservoir ; (d) détermination de la qualité de l'huile en fonction de la résistance électrique et de la température ; (e) détermination du niveau d'huile en fonction de la capacité électrique, de la résistance électrique et de la température.

Selon un mode avantageux de l'invention, le procédé comprend en outre les étapes suivantes : (f) mesure de la quantité de débris ferromagnétiques dans l'huile du réservoir ; (g) détermination du taux de pollution de d'huile en fonction de la température et de la quantité de débris ferromagnétiques.

Selon un mode avantageux, le procédé comprend en outre les étapes suivantes :
(h) détermination de la masse d'huile en fonction du niveau d'huile et de la température ; (i) mesure de la vitesse de rotation de la turbomachine ;
(j) détermination de la durée de fonctionnement restante de la turbomachine avant un manque d'huile en fonction de la masse et de la vitesse de rotation.

### Avantages apportés

L'invention permet de consolider les différentes données issues des capteurs afin d'obtenir des valeurs plus fiables dans toutes les conditions d'usage de la turbomachine.

L'implémentation est également rendue compacte par l'intégration de plusieurs capteurs dans le réservoir. Cela minimise les besoins en câblages ou la puissance de transmetteurs sans fils. Aussi, cela évite que les capteurs soient agencés dans le circuit à des endroits où ils formeraient un obstacle à l'écoulement du flux d'huile. La maintenance du système de mesure est également simplifiée.

Le réservoir constitue donc un « smart réservoir » muni d'une unité de calcul intégrée ou connecté à une unité de calcul, qui fait office de « health monitoring » pour l'huile.

### Brève description des dessins

La figure 1 représente une turbomachine axiale avec un réservoir selon l'invention.
La figure 2 esquisse un réservoir de turbomachine selon l'invention.

### Description des modes de réalisation

Dans la description qui va suivre, la direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. La hauteur et l'aspect vertical sont considérés pour le réservoir dans le sens normal de montage.

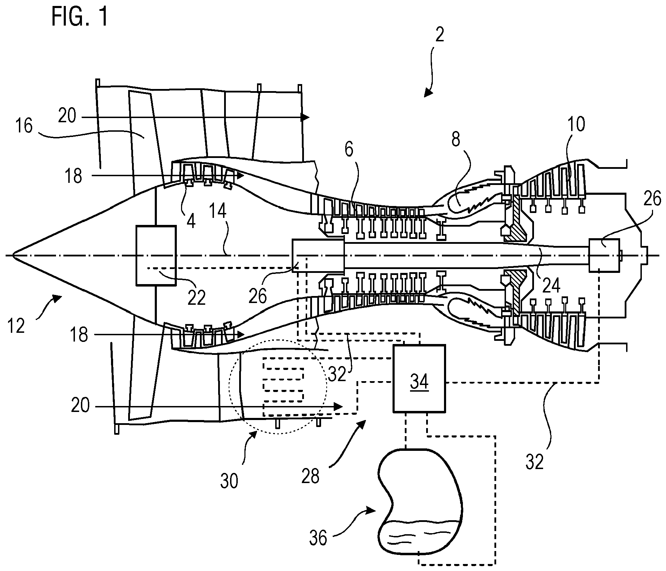

La figure 1 représente de manière simplifiée une turbomachine, en l'occurrence un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique des turbines 10 est transmise via des arbres jusqu'au rotor 12 et met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée dans la chambre de combustion 8.

Une soufflante 16 est couplée au rotor 12 et génère un flux d'air qui se divise en un flux primaire 18 traversant les différents niveaux susmentionnés de la turbomachine, et un flux secondaire 20 traversant un conduit annulaire. Des moyens de démultiplication 22 peuvent réduire la vitesse de rotation de la soufflante 16 et/ou du compresseur basse pression 4 par rapport à la vitesse de la turbine 10 associée.

Le rotor 12 comporte plusieurs arbres 24 coaxiaux supportés par des paliers 26. Le refroidissement et/ou la lubrification des paliers 26 et de l'optionnel réducteur 22 sont assurés par un circuit de lubrification 28. Le circuit de lubrification 28 peut accessoirement alimenter des actionneurs tels des vérins (non représentés). Le circuit de lubrification 28 peut également comprendre un échangeur de chaleur 30 pour refroidir l'huile dont la température peut dépasser 200°C. Ces températures amplifient la corrosivité de l'huile vis-à-vis des joints et des parties polymères.

Le circuit de lubrification 28 peut comprendre des conduites 32 dans lesquelles circulent l'huile sous l'action de pompes. A cette fin, le circuit de lubrification 28 peut comprendre un groupe de lubrification 34.

Le groupe de lubrification 34 peut être directement monté sur une boîte d'accessoires du turboréacteur 2. Le groupe de lubrification 34 est une unité composée d'un corps monobloc qui accueille plusieurs fonctions hydrauliques comme par exemples plusieurs pompes et filtres. Il met en pression l'huile prélevée dans un réservoir 36 et la distribue dans les organes du moteur à lubrifier avant de la reconditionner (refroidir et filtrer) et de la renvoyer vers le réservoir 36.

Une des conduites 32 peut permettre de récupérer l'huile lubrifiant le réducteur 22 et la retourner dans le réservoir 36.

Le réservoir 36 peut être fixé à la nacelle de la turbomachine, ou à un carter de compresseur. Le réservoir 36 peut être placé entre deux parois annulaires guidant les flux primaire 18 ou secondaire 20. Afin d'optimiser son volume utile, le réservoir 36 est essentiellement allongé tout en suivant une forme générale courbe. Cette courbure permet une implantation entre deux cloisons courbes et rapprochées. Le réservoir peut notamment être positionné à proximité d'une source chaude où sa température peut atteindre 100°C.

Aussi, le fonctionnement de la turbomachine implique une usure des paliers 26 et des pompes du groupe de lubrification 34. Cette usure libère des particules métalliques dans le circuit de lubrification 28. Ces particules se retrouvent également dans l'huile du réservoir et peuvent modifier les propriétés physico-chimiques de l'huile.

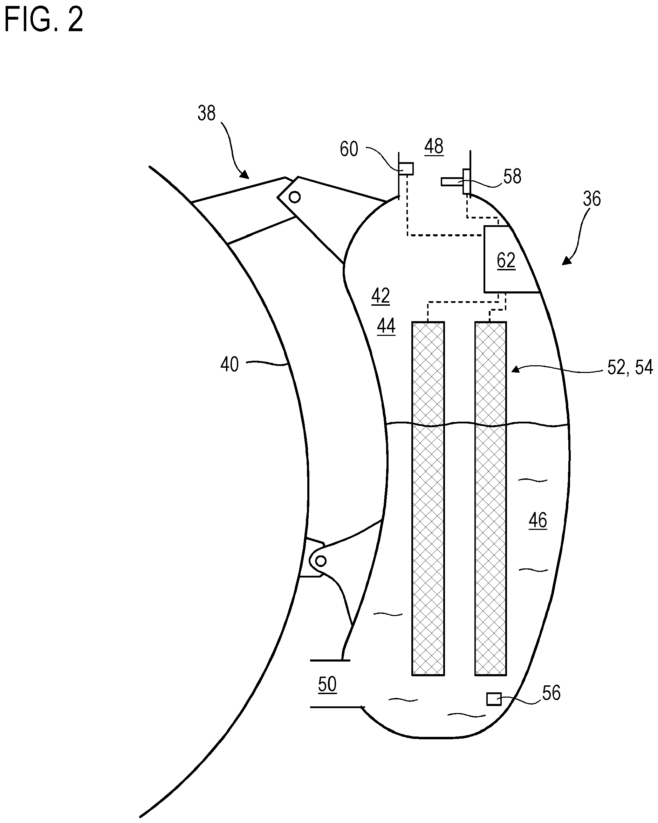

La figure 2 est une vue en coupe du réservoir d'huile 36.

Le réservoir 36 est dans cet exemple assemblé au moyen d'éléments d'assemblage 38 à un carter 40 de compresseur 4, 6.

Le réservoir 36 comprend une chambre 42 dont une partie 44 est essentiellement occupé par de l'air ou une phase essentiellement gazeuse (avec des gouttelettes d'huile en suspension) et une partie 46 est essentiellement occupée par de l'huile (avec des impuretés).

Du fait de la gravité, la partie 46 est généralement en dessous de la partie 44 dans le sens de la figure 2.

Le réservoir comprend au moins une entrée 48, illustrée ici dans une partie haute du réservoir 36. Le réservoir comprend au moins une sortie 50, illustrée ici dans une partie basse du réservoir 36. L'entrée 48 et la sortie 50 permettent la circulation de l'huile. Elles peuvent être reliées au groupe de lubrification 34. La position de l'entrée 48 et de la sortie 50 peut être adaptée en fonction des éléments environnant.

Le réservoir 36 est représenté de façon schématique. Celui-ci peut comprendre (non représentés) un désaérateur, un évent, un déshuileur, ainsi que des clapets et/ou des vannes notamment associés à l'entrée 48 et/ou à la sortie 50.

Le réservoir 36 comporte un certain nombre de capteurs 52, 54, 56, 58, 60 reliés à une unité de calcul 62. Les capteurs 52, 54, 56, 58, 60 communiquent avec l'unité de calcul 62 au moyen d'une connectique physique ou sans fil. La paroi du réservoir peut faire l'office d'un conducteur électrique. Les capteurs 52, 54, 56, 58, 60 peuvent utiliser différentes technologies pour mesurer différentes quantités physiques. Chacun des capteurs 52, 54, 56, 58, 60 est optionnel.

Notamment, le capteur capacitif participant à la mesure du niveau d'huile peut être remplacé par un autre capteur utilisant une autre technologie.

Une seule unité de calcul 62 est prévue, afin de simplifier les besoins de communication avec les autres unités de contrôle de l'avion, et afin de limiter l'encombrement dans le réservoir 36. L'unité 62 peut être disposée sur la paroi du réservoir 36, voire même dans le réservoir 36, c'est-à-dire dans la chambre 42.

Dans une variante non représentée, l'unité de calcul 62 peut être à distance du réservoir et être intégrée au FADEC (full authority digital engine (or electronics) control) de l'aéronef.

Les capteurs 52 et 54 mesurent la capacité électrique C et la résistance électrique R entre deux électrodes respectives (dont une peut être formée par la paroi du réservoir).

Les électrodes peuvent être du type de celles détaillées dans la demande EP 3 282 104 A1.

Les électrodes baignent dans l'huile et renvoient à l'unité de calcul 62 les valeurs de résistance et de capacité électrique.

L'unité de calcul 62 reçoit également une valeur de la température T mesurée par un capteur de température 56 et une valeur de concentration en débris dans l'huile Cd mesurée par un capteur détectant les débris ferromagnétiques 58.

Le capteur de température 56 peut être agencé dans une partie basse 46 du réservoir 36 de façon à être dans une partie calme et inondée du réservoir 36. Alternativement, il peut être agencé sur un flotteur.

Le capteur de débris 58 peut être agencé en entrée 48 du réservoir 36. Il peut être du type décrit dans la demande BE2019/5850 (PCT/EP2020/081945), c'est-à-dire un aimant entouré d'une bobine, le tout potentiellement isolé dans une enveloppe amagnétique.

L'unité de calcul 62 établit, à partir des mesures des capteurs, des estimations de : la qualité q de l'huile, le niveau n d'huile, le taux de pollution tp de l'huile et la masse m de l'huile.

La qualité q de l'huile est évaluée à partir de la mesure de la résistance R et de la température T. La résistance électrique est un bon témoin de la qualité de l'huile. Cependant, la présente invention corrige les valeurs de qualité en fonction de la température : il est possible qu'une huile de mauvaise qualité et une huile de bonne qualité partagent une même valeur de résistance électrique mais à des températures différentes. Ainsi, en prenant en compte la température, la valeur de la qualité peut être corrigée. On analysera donc la température et la résistance mesurée dans une nomenclature référant les valeurs de référence pour différents niveaux de qualités (par exemple un tableau à double entrée).

Alternativement la qualité peut être un score résultant d'un calcul prenant en compte la résistance et la température.

Aussi, à partir des valeurs de résistance et de température, les variations de résistance en fonction d'un gradient de température peuvent être calculées et utilisées pour établir la qualité de l'huile.

La qualité peut refléter une pollution de fuel dans l'huile (« Fuel in oil »).

Le tableau 1 ci-dessous est un exemple de prise en compte de la résistance et de la température pour déterminer la qualité de l'huile.

**Tableau 1**

| | 100°C | 110°C | ... | 240°C | 250°C |
|---|---|---|---|---|---|
| R1 | q_{1,100} | q_{1,110} | ... | q_{1,240} | q_{1,250} |
| R2 | q_{2,100} | q_{2,110} | ... | q_{2,240} | q_{2,250} |
| ... | ... | ... | ... | ... | ... |
| R3 | q_{3,100} | q_{3,110} | ... | q_{3,240} | q_{3,250} |
| R4 | q_{4,100} | q_{4,110} | ... | q_{4,240} | q_{4,250} |

Les valeurs de R1 à R4 peuvent être de l'ordre de la dizaine de MΩ.

Ce type d'analyse peut également être appliqué à la détermination des valeurs de niveau n d'huile, de taux de pollution tp de l'huile et de la masse m de l'huile. Le niveau n d'huile est déterminé par l'unité de calcul 62 en prenant en compte la capacité électrique C, la résistance électrique R et la température T. S'il est connu d'estimer le niveau d'huile par une mesure de capacité électrique ou de résistance électrique, la présente invention permet de corriger les valeurs obtenues en combinant ces deux mesures et en prenant de plus en compte la température.

Pour un réservoir de dimensions données, il est possible d'effectuer des mesures de référence (de calibrage) pour différents niveaux de remplissage d'huile, et ce à différentes températures. Si la mesure de la résistance électrique donne de bons résultats à basse température, les mesures ne sont pas adaptées à des hautes températures, d'autant que la capacité électrique varie en fonction de la qualité de l'huile (voir ci-dessus). En prenant en compte à la fois la mesure de la résistance, de la capacité et de la température, on s'affranchit des faiblesses de l'une ou l'autre de ces mesures.

Le taux de pollution tp de l'huile est quant à lui calculé à partir d'une concentration de débris ferromagnétique Cd et corrigé en fonction de la température. En effet, un taux important de débris à basse température peut être normal alors qu'un taux de débris à haute température peut révéler une usure prématurée de certaines pièces mécaniques de la turbomachine. Ainsi, la présente invention propose une mesure de la pollution de l'huile par la mesure de débris enrichie de la mesure de température.

Quant à la masse m de l'huile, celle-ci peut être calculée à partir du niveau d'huile n et de la température. Comme l'huile peut contenir des impuretés (débris métalliques, bulles de gaz), lier sa masse au volume n'est pas complètement exact. En corrigeant le niveau d'huile avec la température, les valeurs de masse sont plus précises. La masse volumique varie avec la température et il convient donc de considérer la masse volumique de l'huile qui correspond à sa température. Aussi, l'huile présente ailleurs dans le circuit est à prendre en compte. Celle-ci peut être constante ou liée à la vitesse de rotation du moteur.

Les mesures des capteurs peuvent être faites en continu ou à une fréquence donnée. Suite au calcul de la masse m d'huile pour différentes mesures successives, il est possible d'en déduire les variations de la masse au cours du temps. Les variations de masse reflètent la consommation d'huile (ou la quantité perdue). Cette consommation est en première approximation proportionnelle à la vitesse de rotation N de la turbomachine.

Ainsi, en se basant sur la vitesse de rotation N et sur la consommation d'huile, le temps d'utilisation dt disponible avant épuisement de l'huile peut être calculé. Ainsi, la durée de vol restante, pour une vitesse de rotation donnée (ou un schéma de vitesses de rotations préétabli), peut être déterminée. Les calculs sont similaires à ceux utilisés pour estimer la distance restant à parcourir dans un véhicule automobile avant la panne d'essence.

La vitesse de rotation N de la turbomachine peut être mesurée au niveau de la soufflante 16, ou d'un des arbres 24 de transmission. Alternativement, une image de la vitesse de rotation est perçue par la pression en entrée 48 du réservoir 36, mesurée par un capteur de pression 60.

La mesure de la pression donne une indication du « gulping » en entrée de réservoir. En effet, lorsque la masse d'huile est évaluée uniquement à partir du niveau d'huile, des erreurs d'estimation apparaissent en cas de gulping. Il est donc utile de le détecter.

## Revendications

1. Turbomachine (2) comprenant un circuit de lubrification (28) avec un réservoir (36) d'huile, le réservoir (36) comprenant :
- une chambre (42) destinée à contenir l'huile ;
- une entrée (48) et une sortie (50) permettant respectivement à l'huile de pénétrer dans la chambre (42) et d'en être extraite ; et
- des capteurs (52, 54, 56, 58, 60), agencés dans la chambre (42), dans l'entrée (48) et/ou dans la sortie (50) ;
les capteurs (52, 54, 56, 58, 60) comprenant un capteur (54) pour mesurer la résistance électrique de l'huile, un capteur de température (56) pour mesurer la température de l'huile et un capteur (58) de la quantité de débris ferromagnétiques présents dans l'huile,
la turbomachine (2) comprenant une unité de calcul (62) recevant les données mesurées par les capteurs (52, 54, 56, 58, 60), l'unité de calcul (62) déterminant, sur la base des mesures des capteurs (52, 54, 56, 58, 60), au moins l'un des éléments parmi : la qualité de l'huile (q), le niveau d'huile (n), le taux de pollution de l'huile (tp), ou la masse de l'huile (m),
la turbomachine (2) étant **caractérisée en ce qu'**elle comprend en outre une soufflante (16) et un capteur de vitesse de rotation (N) de la soufflante (16), qui communique ses mesures à l'unité de calcul (62), celle-ci déterminant la durée de fonctionnement (dt) restante de la turbomachine (2) avant un manque d'huile en fonction de la vitesse de rotation (N) et de la masse d'huile (m).

2. Turbomachine (2) selon la revendication 1, **caractérisée en ce que** le capteur (58) de débris ferromagnétique est disposé dans l'entrée (48) ou dans la sortie (50).

3. Turbomachine (2) selon la revendication 1 ou la revendication 2, **caractérisée en ce que** le réservoir comporte un capteur capacitif (52) pour mesurer la capacité électrique de l'huile.

4. Turbomachine selon l'une des revendications 1 à 3, **caractérisée en ce que** le capteur de la vitesse de rotation (N) de la soufflante (16) est un capteur (60) de pression (p) disposé dans l'entrée (48) du réservoir (36).

5. Procédé de surveillance des propriétés de l'huile dans un réservoir (36) **caractérisé en ce qu'**il constitue un procédé de surveillance des propriétés de l'huile dans un réservoir d'une turbomachine (2) selon l'une des revendications 1 à 4, le procédé comprenant les étapes suivantes :
(a) mesure de la température (T) de l'huile dans le réservoir (36) ;
(b) mesure de la résistance électrique (R) de l'huile dans le réservoir (36) ;
(c) mesure optionnelle de la capacité électrique (C) de l'huile dans le réservoir (36) ;
(d) détermination de la qualité de l'huile (q) en fonction de la résistance électrique (R) et de la température (T) ;
(e) détermination du niveau d'huile (n) en fonction de la résistance électrique (R) et de la température (T), et éventuellement de la capacité électrique (C).

6. Procédé selon la revendication 5, comprenant en outre les étapes suivantes :
(f) mesure de la quantité de débris ferromagnétiques (Cd) dans l'huile du réservoir (36) ;
(g) détermination du taux de pollution de d'huile (tp) en fonction de la température (T) et de la quantité de débris ferromagnétiques (Cd).

7. Procédé selon l'une des revendications 5 ou 6, comprenant en outre les étapes suivantes :
(h) détermination de la masse d'huile (m) en fonction du niveau d'huile (n) et de la température (T) ;
(i) mesure de la vitesse de rotation (N) de la turbomachine (2) ;
(j) détermination de la durée de fonctionnement restante (dt) de la turbomachine (2) avant un manque d'huile en fonction de la masse (m) et de la vitesse de rotation (N).

## Patentansprüche

1. Eine Turbomaschine (2), die einen Schmierkreislauf (28) mit einem Öltank (36) umfasst, wobei der Öltank (36) Folgendes umfasst:
- eine Kammer (42) zur Aufnahme des Öls;
- einen Einlass (48) und einen Auslass (50), durch die das Öl in die Kammer (42) eintreten bzw. aus der Kammer austreten kann; und
- Sensoren (52, 54, 56, 58, 60), die in der Kammer (42), in dem Einlass (48) und/oder dem Auslass (50) angeordnet sind;
wobei die Sensoren (52, 54, 56, 58, 60) einen Sensor (54) zur Messung des elektrischen Widerstands des Öls, einen Temperatursensor (56) zur Messung der Öltemperatur und einen Sensor (58) zur Erfassung der Menge an ferromagnetischen Ablagerungen im Öl umfassen,
die Turbomaschine (2) eine Recheneinheit (62) umfasst, die die von den Sensoren (52, 54, 56, 58, 60) gemessenen Daten empfängt, wobei die Recheneinheit (62) auf der Grundlage der Messungen der Sensoren (52, 54, 56, 58, 60) mindestens eines der folgenden Merkmale bestimmt: Ölqualität (q), Ölstand (n), Ölverschmutzungsrate (tp) oder Ölmasse (m),
**dadurch gekennzeichnet, dass** die Turbomaschine außerdem ein Gebläse (16) und einen Drehzahlsensor (N) zur Erfassung der Drehzahl des Gebläses (16) umfasst, der seine Messungen an die Recheneinheit (62) übermittelt, wobei diese die verbleibende Betriebszeit (dt) der Turbomaschine (2) vor dem Ölmangel anhand der Drehzahl (N) und der Ölmasse (m) bestimmt.

2. Eine Turbomaschine (2) nach Anspruch 1, **dadurch gekennzeichnet, dass** der ferromagnetische Trümmersensor (58) im Einlass (48) oder im Auslass (50) angeordnet ist.

3. Eine Turbomaschine (2) nach Anspruch 1 oder 2, **dadurch gekennzeichnet, dass** der Öltank einen kapazitiven Sensor (52) zur Messung der elektrischen Kapazität des Öls enthält.

4. Eine Turbomaschine nach einem der Ansprüche 1 bis 3, **dadurch gekennzeichnet, dass** der Drehzahlsensor (N) des Gebläses (16) ein im Einlass (48) des Öltanks (36) angeordneter Druck-(p)-Sensor (60) ist.

5. Das Verfahren zur Überwachung der Eigenschaften des Öls in einem Öltank (36), **dadurch gekennzeichnet, dass** es ein Verfahren zur Überwachung der Eigenschaften des Öls in einem Tank einer Turbomaschine (2) nach einem der Ansprüche 1 bis 4 darstellt, wobei das Verfahren Folgendes umfasst:
(a) Messung der Temperatur (T) des Öls in dem Öltank (36);
(b) Messung des elektrischen Widerstands (R) des Öls in dem Öltank (36);
(c) fakultative Messung der elektrischen Kapazität (C) des Öls im Öltank (36);
(d) Bestimmung der Ölqualität (q) auf der Grundlage des elektrischen Widerstands (R) und der Temperatur (T);
(e) Bestimmung des Ölstands (n) auf der Grundlage des elektrischen Widerstands (R) und der Temperatur (T) und möglicherweise der elektrischen Kapazität (C).

6. Das Verfahren nach Anspruch 5, umfasst außerdem:
(f) Messung der Menge an ferromagnetischen Ablagerungen (Cd) im Öl im Öltank (36);
(g) Bestimmen der Ölverschmutzungsrate (tp) auf der Grundlage der Temperatur (T) und der Menge an ferromagnetischen Ablagerungen (Cd).

7. Das Verfahren nach einem der Ansprüche 5 oder 6, ferner umfassend:
(h) Bestimmen der Ölmasse (m) auf der Grundlage des Ölstands (n) und der Temperatur (T);
(i) das Messen der Drehzahl (N) der Turbomaschine (2);
(j) Bestimmen der verbleibenden Betriebszeit (dt) der Turbomaschine (2), bevor das Öl ausgeht, auf der Grundlage der Masse (m) und der Drehzahl (N).

## Claims

1. A turbomachine (2) comprising a lubrication circuit (28) with an oil tank (36), the oil tank (36) comprising:
- a chamber (42) for containing the oil;
- an inlet (48) and an outlet (50) allowing the oil to enter and exit the chamber (42) respectively; and
- sensors (52, 54, 56, 58, 60), arranged in the chamber (42), in the inlet (48) and/or the outlet (50);
the sensors (52, 54, 56, 58, 60) including a sensor (54) for measuring the electrical resistance of the oil, a temperature sensor (56) for measuring oil temperature, and a sensor (58) for detecting the amount of ferromagnetic debris in the oil,
the turbomachine (2) comprising a computing unit (62) receiving the data measured by the sensors (52, 54, 56, 58, 60), wherein the computing unit (62) determines on the basis of the measurements of the sensors (52, 54, 56, 58, 60), at least one of the following: oil quality (q), oil level (n), oil pollution rate (tp), or oil mass (m),
the turbomachine (2) being **characterized in that** it further comprises a blower (16) and a rotational speed sensor (N) for detecting the speed of the blower (16), which communicates its measurements to the computing unit (62), the latter determining the remaining operating time (dt) of the turbomachine (2) before running out of oil, based on the rotational speed (N) and the oil mass (m).

2. Turbomachine (2) according to claim 1, **characterised in that** the ferromagnetic debris sensor (58) is arranged in the inlet (48) or in the outlet (50).

3. Turbomachine (2) according to claim 1 or claim 2, **characterised in that** the oil tank includes a capacitive sensor (52) for measuring the electrical capacity of the oil.

4. Turbomachine according to one of claims 1 to 3, **characterized in that** the rotational speed sensor (N) of the blower (16) is a pressure (p) sensor (60) arranged in the inlet (48) of the tank (36).

5. Method for monitoring the properties of the oil in a tank (36), **characterized in that** it constitutes a method for monitoring the properties of the oil in a tank of a turbomachine (2) according to one of claims 1 to 4, the method comprising:
(a) measuring the temperature (T) of the oil in the tank (36);
(b) measuring the electrical resistance (R) of the oil in the tank (36);
(c) optionally measuring the electrical capacity (C) of the oil in the tank (36);
(d) determining the oil quality (q) based on the electrical resistance (R) and the temperature (T);
(e) determining the oil level (n) based on the electrical resistance (R) and the temperature (T), and possibly the electrical capacity (C).

6. Method according to claim 5, further comprising:
(f) measuring the amount of ferromagnetic debris (Cd) in the oil in the tank (36);
(g) determining oil pollution rate (tp) based on the temperature (T) and the amount of ferromagnetic debris (Cd).

7. Method according to any of claims 5 or 6, further comprising:
(h) determining the oil mass (m) based on the oil level (n) and the temperature (T);
(i) measuring the rotational speed (N) of the turbomachine (2);
(j) determining the remaining operating time (dt) of the turbomachine (2) before running out of oil, based on the mass (m) and the rotational speed (N).
